(19) Europäisches Patentamt
European Patent Office
Office européen des brevets

(11) **EP 2 594 958 B1**

(12) **EUROPÄISCHE PATENTSCHRIFT**

(45) Veröffentlichungstag und Bekanntmachung des Hinweises auf die Patenterteilung:
**14.01.2015 Patentblatt 2015/03**

(21) Anmeldenummer: **12190340.5**

(22) Anmeldetag: **29.10.2012**

(51) Int Cl.:
*G01S 15/89* (2006.01)   *G01S 7/527* (2006.01)
*G01S 15/42* (2006.01)   *G01S 15/10* (2006.01)

(54) **Verfahren und Vorrichtung zum akustischen Vermessen eines Gewässergrundes**

Device and method for acoustic measurement of the bed of a body of water

Procédé et dispositif destinés à la mesure acoustique d'un sol sous-marin

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2011 DE 102011118788**

(43) Veröffentlichungstag der Anmeldung:
**22.05.2013 Patentblatt 2013/21**

(73) Patentinhaber: **ATLAS ELEKTRONIK GmbH**
**28309 Bremen (DE)**

(72) Erfinder: **Freking, Dipl.-Phys. Benno**
**28844 Weyhe-Leeste (DE)**

(56) Entgegenhaltungen:
DE-A1- 3 516 698    DE-A1- 3 520 398
DE-A1- 4 319 607    DE-A1- 19 959 014

**Beschreibung**

Die Erfindung betrifft ein Verfahren zum akustischen Vermessen eines Gewässergrundes mittels eines Echolotsystems der im Oberbegriff von Anspruch 1 genannten Art sowie einer entsprechenden Vorrichtung zum Ausführen eines derartigen Verfahrens gemäß dem Oberbegriff von Anspruch 8.

Die Erfindung wird überwiegend zur akustischen Vermessung eines Gewässergrundes innerhalb eines vorbestimmten Unterwasserareals angewandt. Üblicherweise werden auf Forschungs- und Vermessungsfahrzeugen, die während der Fahrt Meerestiefen vermessen, Fächerlote eingesetzt. Aus EP 0140258 A1 ist bspw. ein Fächerlotsystem bekannt, bei dem mittels einer entsprechenden Sendevorrichtung Schallimpulse ausgesendet werden, welche nach Reflexion an dem Gewässergrund als Echos mittels einer Empfangsvorrichtung richtungsselektiv empfangen werden. Die Empfangsvorrichtung erzeugt aus diesen Echos zugehörige Empfangssignale, wodurch ein Bodenprofil des Gewässergrundes im Wesentlichen durch fächerförmige, gleichzeitige Lotung einer Vielzahl von Punkten erfasst wird.

Für ein derartiges Messverfahren ist es jedoch notwendig, die Schiffsbewegungen zu erfassen, da die Messergebnisse durch die aufgrund des Wellengangs herrührenden Schiffsbewegungen beeinflusst werden. Bei diesen Schiffsbewegungen handelt es sich um Drehbewegungen um drei senkrecht zueinander verlaufende Achsen eines objektbezogenen Koordinatensystems, dessen Ursprung sich im Mittelpunkt des Fahrzeugs befindet. Zu den Drehbewegungen gehören das Rollen um die Längsachse des Wasserfahrzeugs, das Nicken oder Stampfen um die Querachse des Wasserfahrzeugs und das Gieren um die Hochachse des Wasserfahrzeugs.

Um diese Fehler korrigieren zu können, werden herkömmlicherweise Sensoren benutzt, welche die Lage des Wasserfahrzeugs erfassen. Die Werte dieser Sensoren werden dem Fächerlot zugeführt, um die von der Empfangsvorrichtung erzeugten Empfangssignale entsprechend zu korrigieren. EP 0512276 A2 zeigt bspw. ein Verfahren zum Bestimmen der Lage eines Wasserfahrzeugs.

Die aufgrund der Dreh- und Translationsbeschleunigungen gemessenen Störsignale werden als Rohdaten im Echolotsystem abgelegt und bei der Ermittlung von Tiefen- und Ablagewerten für die Bestimmung des Bodenprofils des Gewässergrundes berücksichtigt. Bei der Vermessung unter Einfluss von größeren Roll-, Nick- und Gierbewegungen treten jedoch vermehrt Fehler in dem gemessenen Bodenprofil des Gewässergrundes auf, welche auf die Schiffsbewegungen zurückzuführen sind.

Weitere Störsignale, welche anteilig in den von der Empfangsvorrichtung erzeugten Empfangssignalen enthalten sind, sind bspw. Eigenschiffsgeräusche. DE 3520398 A1 zeigt ein Verfahren zum Ausblenden von Störsignalen. Hier wird jedoch eine Frequenz-Analyse durchgeführt, um bestimmte Frequenzbereiche auszublenden. Nachteilig hierbei ist, dass möglicherweise auch Nutzsignale, die in dem auszublendenden Frequenzbereich liegen, teilweise entfernt werden.

Der Erfindung liegt daher das Problem zugrunde, die Bestimmung von Tiefenwerten mit einem Echolotsystem zu verbessern, um die Genauigkeit bei der Vermessung eines Gewässergrundes zu erhöhen.

Die Erfindung löst dieses Problem durch die Merkmale eines Verfahrens zum akustischen Vermessen eines Gewässergrundes gemäß Anspruch 1 sowie eine entsprechende Vorrichtung zum Ausführen des Verfahrens mit den Merkmalen des Anspruchs 8.

In der DE 43 19 607 A1 ist ein Verfahren zum Bestimmen von Tiefenwerten eines Gewässers mit einem Fächerlot beschrieben, das aufgrund jedes ausgelösten Sendeimpulses für eine Vielzahl vorgegebener Empfangsrichtungen von Gewässerböden gestreute bzw. reflektierte Lotimpulse empfängt, deren Laufzeit misst und aus Laufzeit, Empfangsrichtung und mittlerer Schallgeschwindigkeit den jeweiligen Tiefenwert ermittelt.

In der DE 35 16 698 A1 ist ein Verfahren zur flächenhaften Vermessung von Gewässerböden mittels Echolotung unter Anwendung einer Schwingeranordnung offenbart, welche quer zur Fahrtrichtung eines Schiffes unter Wasser fächerförmig mehrere Schallkegel aufweist.

In der DE 35 20 398 A1 ist ein Verfahren zum Ausblenden von durch Betriebsaggregate eines Trägerfahrzeugs erzeugten Störsignalen aus Ausgangssignalen einer auf dem Trägerfahrzeug installierten Wasserschallempfangsanlage offenbart, wobei mindestens ein Körperschallaufnehmer an einer geeigneten Stelle an den Betriebsaggregaten angeordnet wird, so dass aus dessen Körperschallsignalen Körperschallspektren und aus den Ausgangssignalen Empfangsspektren abgeleitet werden und dass die Körperschallspektren von den Empfangsspektren abgezogen werden.

Zum Bestimmen eines Bodenprofils eines Gewässergrundes entsprechend dem erfindungsgemäßen Verfahren werden mittels eines Echolotsystems Tiefenwerte bestimmt.

Eine Sendevorrichtung des Echolotsystems sendet dazu Schallimpulse in ein zu vermessendes Unterwasserareal aus. Eine Empfangsvorrichtung des Echolotsystems erfasst die vom Gewässergrund reflektierten Schallwellen und bildet daraus zugehörige Empfangssignale. Zu den reflektierten Schallwellen werden Schalllaufzeiten gemessen und daraus Tiefen- und Ablagewerte berechnet.

Um die Bestimmung von Tiefenwerten bei der Vermessung eines Gewässergrundes zu verbessern, werden die Signale unterschiedlicher Störquellen, insbesondere der Schiffsbewegungen, mittels einer Störsignalerfassungseinheit gemessen. Erfindungsgemäß lässt sich der Anteil dieser Störsignale an dem von der Empfangsvorrichtung gemessenen Empfangssignal ermitteln.

Um das Empfangssignal vorteilhaft zu korrigieren, wird der Anteil aller im Empfangssignal enthaltenen Störsignale mittels einer Regressionseinheit ermittelt und mittels eines Korrekturmoduls die in dem Empfangssignal enthaltenen Störsignale mit ihren jeweiligen Anteilen von dem Empfangssignal subtrahiert.

Somit lässt sich mit dem erfindungsgemäßen Verfahren vorteilhaft die Genauigkeit bei der Vermessung des Gewässergrundes erhöhen, obwohl die einzelnen Störsignale, welche für die Tiefenfehler verantwortlich sind, zwar qualitativ bekannt, jedoch quantitativ unbekannt sind.

In einer bevorzugten Ausführungsform der Erfindung erfolgt die Korrektur des Empfangssignals iterativ mittels eines Iterationsmoduls. Zunächst werden die Störsignale, die evtl. anteilig in dem Empfangssignal enthalten sind, bestimmt und deren jeweiliger Anteil an dem Empfangssignal zu null gesetzt. Dann werden für alle Störsignale die jeweiligen Anteile dieser Störsignale am Empfangssignal ermittelt. Diese Störsignale mit den jeweiligen zuvor ermittelten Anteilen werden von dem Empfangssignal subtrahiert, um ein entsprechendes korrigiertes Empfangssignal zu erzeugen. Für die folgenden Iterationen werden dann die jeweiligen Anteile der Störsignale an dem korrigierten Empfangssignal ermittelt und zu dem bereits vorhandenen Wert des jeweiligen Anteils aufaddiert. Die Störsignale mit den derart ermittelten Anteilen werden erneut von dem Empfangssignal subtrahiert. Diese Vorgänge werden für die vorbestimmte Anzahl der Iterationen wiederholt, um vorteilhaft die Genauigkeit bei der Vermessung des Gewässergrundes zu erhöhen.

Gemäß einer weiteren bevorzugten Ausführungsform der Erfindung bildet die Empfangsvorrichtung einen aus einer Vielzahl von gegeneinander verschwenkten, aus Richtcharakteristiken bestehenden Lotfächer. Dabei ist jeder Richtcharakteristik ein Gruppensignal zugeordnet, welches dem Empfangssignal entspricht. Mittels einer derartigen Empfangsvorrichtung wird vorteilhaft von dem Vermessungsfahrzeug aus akustisch ein Fächer von Empfangsstreifen in aneinander gereihten Empfangsrichtungen am Gewässergrund erzeugt. Jeder dieser Empfangsrichtungen ist eine Richtcharakteristik bzw. ein Empfangssignal zugeordnet, aus der bzw. dem die Laufzeit eines Sendeimpulses bestimmt und daraus Tiefen- und Ablagewerte berechnet werden. Eine derartige Vermessung des Gewässergrundes erfolgt vorteilhafterweise flächendeckend.

In einer weiteren bevorzugten Ausführungsform der Erfindung werden die Störsignale mittels der Störsignalerfassungseinheit anhand von gemessenen Schiffsbewegungen, insbesondere Bewegungen um den Roll-, Nick- und/oder Gierwinkel, ermittelt. Da diese Schiffsbewegungen als Fehler in das Messergebnis bzw. das Empfangssignal eingehen, können diese Fehler vorteilhaft mit dem erfindungsgemäßen Verfahren korrigiert werden.

Gemäß einer weiteren bevorzugten Ausführungsform der Erfindung wird mittels der Regressionseinheit der Anteil jedes ermittelten Störsignals an dem Empfangssignal bzw. an dem korrigierten Empfangssignal mittels eines statistischen Analyseverfahrens, insbesondere mittels linearer Regression, ermittelt. Die Erfindung hat erkannt, dass in dem Empfangssignal des Echolotsystems Störsignale enthalten sind, welche unabhängig von dem Echolotsystem ermittelbar sind. Somit sind die einzelnen Störsignale zwar bekannt, nicht aber die Amplitude, mit der diese Störsignale in dem Empfangssignal enthalten sind. Das bevorzugte erfindungsgemäße Verfahren hat den Vorteil, mittels des statistischen Analyseverfahrens den Anteil der Störsignale am Empfangssignal zu ermitteln. Somit ist eine Korrektur des Empfangssignals um den jeweiligen Anteil jedes Störsignals vorteilhaft möglich. Da in dem korrigierten Empfangssignal immer noch geringe Anteile der Störsignale vorhanden sein können, werden auch diese im Rahmen einer Iteration mittels des statistischen Analyseverfahrens ermittelt. Das hat den Vorteil, die Anteile der Störsignale an dem korrigierten Empfangssignal iterativ zu minimieren.

In einer weiteren Ausführungsform der Erfindung wird für den Fall, dass mittels des statistischen Analyseverfahrens ein negativer Wert für den Anteil des Störsignals am Empfangssignal bzw. am korrigierten Empfangssignal ermittelt wird, dieser Anteil auf den Wert null gesetzt. Die Erfindung verhindert somit vorteilhaft, dass das korrigierte Empfangssignal verfälscht wird, da ein negativer Anteil eines Störsignals am Empfangssignal bzw. am korrigierten Empfangssignal nicht vorhanden sein kann.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:

Fig. 1    eine Darstellung einer möglichen Messgeometrie,

Fig. 2    eine Darstellung der drei möglichen Drehbewegungen des Wasserfahrzeugs,

Fig. 3    eine Diagramm-Darstellung von sechs messbaren Störsignalen sowie eines Summen-Störsignals und

Fig. 4    ein Blockschaltbild zur Erläuterung des erfindungsgemäßen Verfahrens.

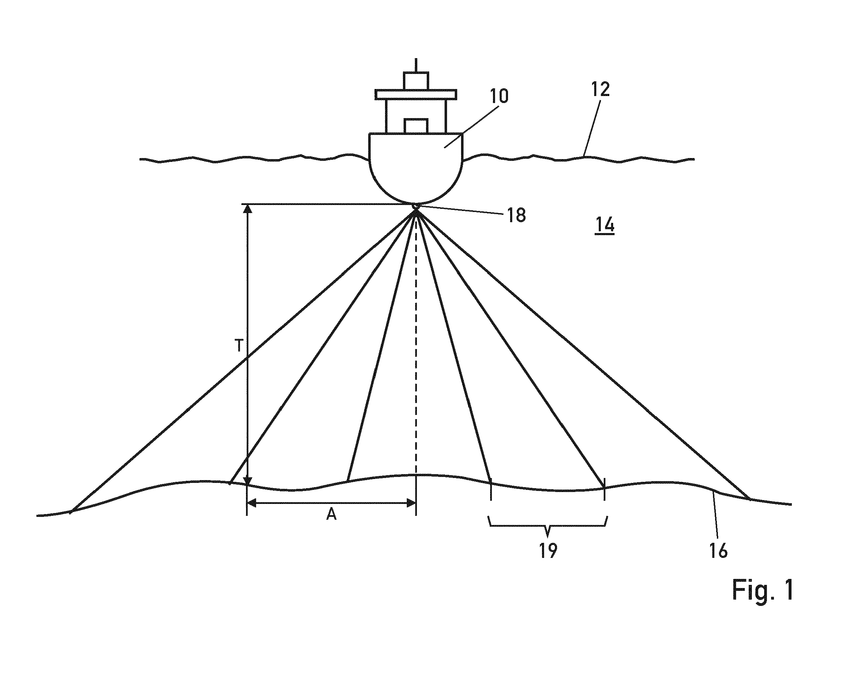

Fig. 1 zeigt eine Darstellung einer möglichen Messgeometrie gemäß einem Ausführungsbeispiel der Erfindung, bei der ein Wasserfahrzeug 10 auf einer Wasseroberfläche 12 eines Gewässers 14 abgebildet ist. Alternativ zu einem derartigen Überwasserfahrzeug kann ebenso ein Unterwasserfahrzeug eingesetzt werden.

Das Bodenprofil eines Gewässergrundes 16 ist über Tiefenwerte T und Ablagewerte A bestimmt.

Das hier dargestellte Wasserfahrzeug 10 ist mit einem Fächerlot 18 ausgerüstet, dessen Lotfächer durch die teilweise dargestellten Sektoren 19 angedeutet ist.

Das Fächerlot 18 ist am Boden des Wasserfahrzeugs 10 angebracht und weist eine Sende- und Empfangsvorrichtung auf.

Mit der Sendevorrichtung wird ein Sendezielstreifen, welcher sich quer zur Fahrtrichtung des Wasserfahrzeugs 10 befindet, auf den Gewässergrund 16 mit Schallimpulsen beschallt. Während die Schallabstrahlung in Fahrzeugquerrichtung den Empfangsbereich des Lotfächers überdeckt, ist die Schallabstrahlung in Fahrzeuglängsrichtung jedoch stark gebündelt.

Mit der Empfangsvorrichtung werden die im Sendezielstreifen am Gewässergrund 16 reflektierten Schallwellen richtungsselektiv empfangen. Eine entsprechende elektronische Verarbeitung der einzelnen Empfangssignale bringt einen Fächer von in Fahrtrichtung aneinander gereihten schmalen Empfangssektoren 19 hervor.

Da den einzelnen Empfangssektoren 19 am Gewässergrund 16 unterschiedliche Entfernungen zugeordnet sind, ergeben sich für die rückgestreuten Schallwellen je nach Empfangswinkel unterschiedliche Laufzeiten, die vom Fächerlot 18 gemessen werden. Für jede Empfangsrichtung i ergibt sich eine gemessene Laufzeit t(i) der reflektierten Schallwelle, woraus zugeordnete Tiefenwerte T(i) und Ablagewerte A(i) ermittelt werden:

$$T(i) = c_m \frac{t(i)}{2} \cos \alpha_m(i),$$

$$A(i) = c_m \frac{t(i)}{2} \sin \alpha_m(i),$$

wobei $c_m$ die mittlere Schallgeschwindigkeit und $\alpha_m(i)$ der mittlere Empfangswinkel für die Empfangsrichtung i darstellen.

Das in Fig. 1 dargestellte Ausführungsbeispiel der Erfindung zeigt die Verwendung eines Fächerlotes 18 zur Vermessung des Gewässergrundes 16. Die Erfindung ist jedoch nicht auf die Verwendung eines Fächerlotes 18 beschränkt. Für die Durchführung des erfindungsgemäßen Verfahrens ist der Gebrauch weiterer Echolotsysteme wie bspw. ein Seitensichtsonar, bei dem der Gewässergrund 16 links und rechts seitlich vom Vermessungsfahrzeug 10 aufgenommen wird, oder ein Objektsuchsonar, welches am Rumpf des Vermessungsfahrzeugs 10 installiert ist und um 360 Grad gedreht werden kann, möglich.

Die Genauigkeit bei der Bestimmung der Tiefenwerte hängt von der Präzision der Laufzeitmessung der reflektierten Schallwellen ab. Die durch den Seegang verursachte instabile Lage der Empfangsvorrichtung des Echolotsystems 18 führt jedoch zu beträchtlichen Fehlern bei der Vermessung des Gewässergrundes 16.

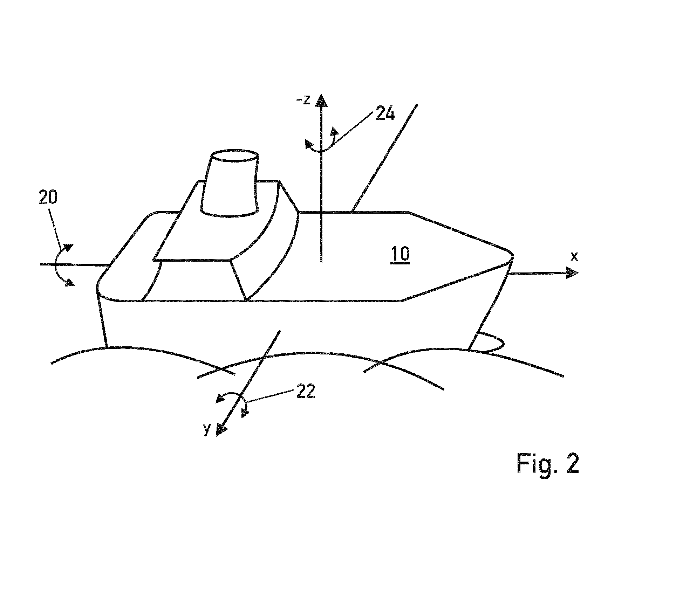

Fig. 2 zeigt schematisch die drei möglichen Drehbewegungen des Wasserfahrzeugs 10, hier eines Vermessungsschiffes. Dargestellt sind drei senkrecht zueinander verlaufende Achsen x, y, z eines objektbezogenen rechtshändigen Koordinatensystems, dessen Ursprung sich im Fahrzeugmittelpunkt befindet.

Die Drehbewegung um die in Längsrichtung oder Bewegungsrichtung des Schiffes verlaufende x-Achse wird als Rollen 20 bezeichnet. Mit dem Rollen 20 entstehen Fehler bei der Bestimmung der Tiefenwerte, da die Orte der Empfangssektoren 19 verfälscht werden. Bei der Verwendung eines Fächerlotes 18 treten diese Fehler vermehrt an den äußeren Sektoren 19 auf.

Die Drehbewegung um die Querachse (y-Achse) des Schiffes 10 wird als Nicken oder Stampfen 22 bezeichnet. Beim Stampfen 22 treten ähnliche Fehler auf wie beim Rollen 20, üblicherweise jedoch mit geringeren Auswirkungen auf die Messergebnisse.

Die Drehbewegung um die vertikale Achse (z-Achse) des Schiffes 10 wird als Gieren 24 bezeichnet. Somit wird eine durch Seegang oder Strömung verursachte Abweichung des Schiffes 10 vom Kurs auch als Gieren 24 bezeichnet.

Eine hier nicht dargestellte weitere Bewegungsebene bezeichnet den Hub des Schiffes. Der Hub beschreibt die senkrechte Bewegung des Schiffes 10 und wird durch die Wellenbewegung verursacht.

Da die vorstehend genannten Schiffsbewegungen in die Vermessung des Gewässergrundes eingehen, ist es notwendig diese Bewegungen zu erfassen. Auf dem Wasserfahrzeug 10 installierte Bewegungssensoren zeichnen die Schiffsbewegungen auf und speichern diese als Störsignale ab.

Die Erfindung ist jedoch nicht auf Störsignale, die von Schiffsbewegungen herrühren, beschränkt. Jedwede messbaren Signale von unterschiedlichen Störquellen, welche linear unabhängig vom Empfangssignal am Empfangssignal beteiligt sind, lassen sich anteilig von diesem Empfangssignal subtrahieren.

Werden bspw. mittels der Empfangsvorrichtung Empfangssignale aus unterschiedlichen Raumrichtungen empfangen, lassen sich zu jeder Empfangsrichtung die Anteile der Eigenschiffsgeräusche bestimmen und von dem jeweiligen Empfangssignal subtrahieren, um dieses von den Störungen zu befreien. Dazu muss jedoch eine evtl. vorhandene Phasenverschiebung bei dem gemessenen Störsignal beachtet werden.

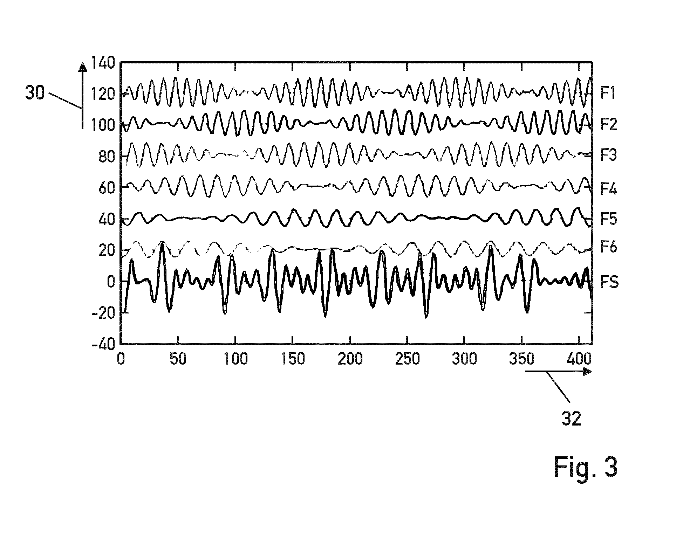

Fig. 3 zeigt eine Diagramm-Darstellung von sechs möglichen Störsignalen F1, F2, ..., F6 sowie ein Summen-Störsignal FS. Für die Darstellung der einzelnen Funktionsgrafen der Störsignale F1, F2, ..., F6 ist die jeweilige Amplitude auf einer y-Achse 30 über die Zeit auf einer x-Achse 32 aufgetragen. Aus Darstellungsgründen sind die einzelnen Funktionsgrafen der Störsignale F1, F2, ..., F6 mit einem Offset n x 20 versehen, wobei n = 1, 2, ..., 6 beträgt.

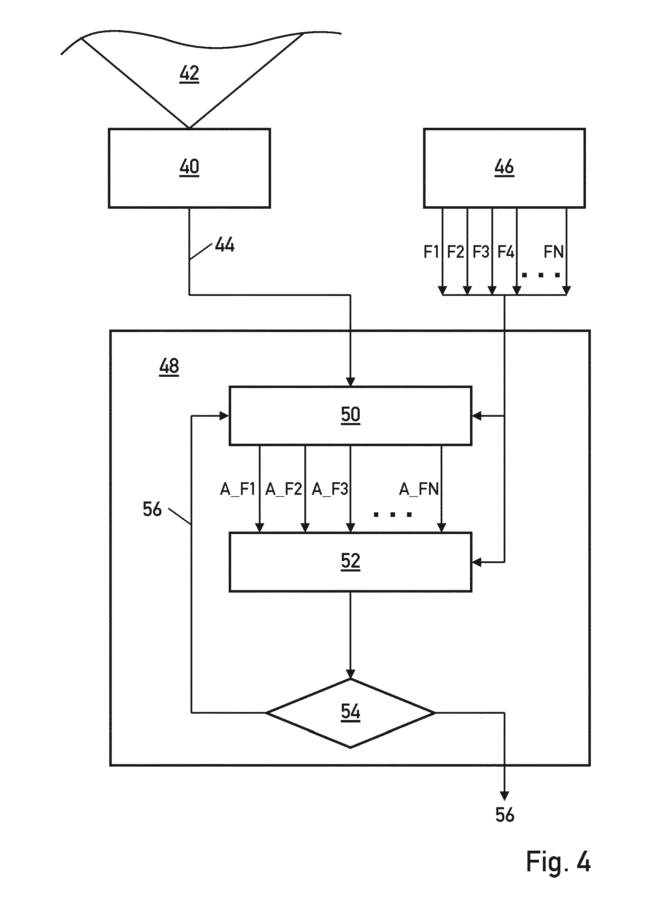

Fig. 4 zeigt ein Blockschaltbild zur Erläuterung des erfindungsgemäßen Verfahrens zum Vermessen eines Gewässergrundes 16 mittels eines an einem Wasserfahrzeug angebrachten Echolotsystems 40, insbesondere eines Fächerlotes 18. Das Echolotsystem 40 sendet mittels einer Sendevorrichtung Schallsignale gerichtet in ein zu vermessendes Unterwasserareal aus und empfängt mittels einer Empfangsvorrichtung die am Gewässergrund 16 reflektierten Schallwellen richtungsselektiv. Durch elektronische Verarbeitung innerhalb der Empfangsvorrichtung des Echolotsystems 40 wird erreicht, dass ein Fächer 42 aus schmalen Empfangssektoren 19 bzw. Richtcharakteristiken auf den beschallten Gewässergrund 16 ausgerichtet ist, um die reflektierten Schallwellen aufzunehmen und daraus entsprechende Empfangssignale 44 zu erzeugen. Aus der Lotrichtung der aufgenommenen Schallwellen und der zugehörigen Schalllaufzeit lässt sich ein zugehöriger Tiefenwert ermitteln.

Ferner ist zum Ausführen des erfindungsgemäßen Verfahrens eine Störsignalerfassungseinheit 46 vorgesehen, welche die Signale F1, F2, ..., FN von unterschiedlichen Störquellen aufzeichnet.

Das vom Echolotsystem 40 gemessene Empfangssignal 44 einer Empfangsrichtung, zu der ein Tiefenwert ermittelt werden soll, und die von der Störsignalerfassungseinheit 46 bestimmten Störsignale F1, F2, ..., FN, welche anteilig an diesem gemessenen Empfangssignal 44 enthalten sind, werden einem Iterationsmodul 48 übergeben.

Vor Iterationsbeginn wird die Anzahl an Iterationen für das Verfahren festgelegt. Dies kann automatisch oder manuell durch Bedienereingriff erfolgen. Ferner werden vor Iterationsbeginn zunächst die Anteile A_F1, A_F2, ..., A_FN der Störsignale F1, F2, ..., FN an dem Empfangssignal 44 zu null gesetzt.

Das gemessene Empfangssignal 44 wird zusammen mit den Störsignalen F1, F2, ..., FN einer Regressionseinheit 50 zugeführt, welche für jedes Störsignal F1, F2, ..., FN den Anteil A_F1, A_F2, ..., A_FN, mit dem das jeweilige Störsignal im Empfangssignal enthalten ist, berechnet.

Diese Anteile A_F1, A_F2, ..., A_FN der Störsignale F1, F2, ..., FN am Empfangssignal 44 werden mittels eines statistischen Analyseverfahrens, insbesondere einer linearen Regression bestimmt.

Dabei wird eine Beziehung zwischen einer abhängigen und einer unabhängigen Variablen ermittelt. Es wird zwischen der erklärenden Variable x - hier eines der o.g. Störsignale F1, F2, ..., FN - und der interessierenden Variable y - hier das o.g gemessene Empfangssignal 44 - unterschieden. Bei einem graphischen Auftragen von aus den Variablen x und y gebildeten Wertepaaren $(x_i|y_i)$ kann eine Funktion ermittelt werden, die die gegebenen Wertepaare optimal annähert. Unter der Annahme eines linearen Zusammenhangs zwischen den Variablen x und y, kann eine Regressionsgerade konstruiert werden, welche die Eigenschaft aufweist, dass die Summe der quadrierten Abweichungen aller Punkte zur Gerade möglichst gering ist. Für jedes evtl. an dem Empfangssignal anteilig vorhandene Störsignal wird in der Regressionseinheit 50 die zugehörige Regressionsgerade ermittelt.

Die Steigung der Regressionsgeraden entspricht dem Quotient aus dem jeweiligen vertikalen und den horizontalen Abstand zweier Punkte der Geraden und ist ein Maß für die Änderung entlang der Regressionsgeraden. Die Steigung gilt somit als Faktor mF1, mF2, ... oder mFN für den Anteil A_F1, A_F2, ... oder A_FN des Störsignals F1, F2, ... oder FN an dem gemessenen Empfangssignal 44, welcher auf den bereits vorhandenen Anteilswert aufaddiert wird, z.B. wird der Anteil A_F1 des Störsignals F1 wie folgt berechnet:

$$A\_F1 = A\_F1 + mF1.$$

Die Regressionseinheit 50 ermittelt somit die Anteile A_F1, A_F2, ..., A_FN aller im Empfangssignal 44 enthaltenen Störsignale F1, F2, ..., FN. Ferner überprüft die Regressionseinheit 50 die jeweiligen Anteile A_F1, A_F2, ..., A_FN nach dem Aufaddieren, ob ein positiver Wert des resultierenden Anteils vorliegt. Für den Fall, dass der Anteil A_F1, A_F2, ... oder A_FN einer der Störsignale F1, F2, ... oder FN negativ ist, wird dieser Anteil zu null gesetzt.

Die von der Regressionseinheit 50 berechneten Anteile A_F1, A_F2, ..., A_FN der Störsignale F1, F2, ..., FN am Empfangssignal 44 werden einem Korrekturmodul 52 übergeben. Dieses Korrekturmodul 52 subtrahiert alle Störsignale F1, F2, ..., FN mit den jeweiligen Anteilen A_F1, A_F2, ..., A_FN vom Empfangssignal 44, um dieses zu korrigieren:

$$F_{korr\_}Signal\,(t) = F\_Signal\,(t) - A\_F1\cdot F1(t) - ... - A\_FN\cdot FN(t)\,,$$

wobei F_Signal (t) dem gemessenen Empfangssignal 44 entspricht und die Subtraktion für jeden Zeitpunkt t des Empfangssignals 44 erfolgt.

Anschließend erfolgt in einem Entscheidungsblock 54 eine Abfrage, ob eine vorbestimmte Anzahl an Iterationen erreicht ist. Für den Fall, dass ein weiterer Iterationsdurchlauf erfolgt, wird das korrigierte Empfangssignal 56 der Regressionseinheit 50 übergeben, so dass die Berechnung der Anteile A_F1, A_F2, ..., A_FN der Störsignale F1, F2, ..., FN nun anhand des korrigierten Empfangssignals 56 erfolgt.

Die Anteile A_F1, A_F2, ..., A_FN werden wieder separat mittels der linearen Regression bestimmt. Anschließend werden diese Anteile auf die zuvor ermittelten Anteile aufsummiert. Für den Fall, dass eine Anteilssumme negativ ist, wird diese zu null gesetzt.

Das Korrekturmodul 52 berechnet erneut das korrigierte Empfangssignal 56 mittels der Subtraktion der Störsignale F1, F2, ..., FN mit den zuvor berechneten Anteilen A_F1, A_F2, ..., A_FN von dem gemessenen Empfangssignal 44.

Der Vorgang der Berechnung der Anteile A_F1, A_F2, ..., A_FN der Störsignale F1, F2, ..., FN sowie die Subtraktion dieser Störsignale F1, F2, ..., FN mit den jeweiligen Anteilen A_F1, A_F2, ..., A_FN von dem gemessenen Empfangssignal 44 wird mehrfach für eine vorbestimmte Anzahl an Iterationen durchgeführt.

Für den Fall, dass der Entscheidungsblock 54 ausgibt, dass die vorbestimmte Anzahl an Iterationen erreicht ist, werden das korrigierte Empfangssignal 56 sowie die Störsignale F1, F2, ..., FN mit ihren jeweiligen Anteilen A_F1, A_F2, ..., A_FN für die Bestimmung von Tiefen- und Ablagewerte einer weiteren Verarbeitung übergeben.

Wenn die Störsignale F1, F2, ..., FN unterschiedlicher Störquellen messbar sind, lassen sich mit dem vorstehend ausgeführten Verfahren die gemessenen Empfangssignale 44 von diesen Störsignalen F1, F2, ..., FN befreien, selbst wenn diese mit unterschiedlichen Anteilen A_F1, A_F2, ..., A_FN in dem gemessenen Empfangssignal 44 enthalten sind. Es muss lediglich die Form der Störsignale F1, F2, ..., FN bekannt sein, nicht jedoch deren Amplitude. Ferner muss das Störsignal F1, F2, ..., FN keiner bestimmten Frequenz entsprechen. Die gemessenen Störsignale F1, F2, ..., FN müssen jedoch von dem Empfangssignal 44 linear unabhängig sein, um das erfindungsgemäße Verfahren durchzuführen.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Verfahren zum akustischen Vermessen eines Gewässergrundes (16) mittels eines an einem Wasserfahrzeug (10) angebrachten Echolotsystems (40), insbesondere eines Fächerlotes (18), mit einer Sende- und Empfangsvorrichtung, bei dem aufgrund von mittels der Sendevorrichtung ausgesendeten Schallimpulsen reflektierte Schallwellen mittels der Empfangsvorrichtung empfangen werden, wobei für eine Vielzahl vorgegebener Empfangsrichtungen der vom Gewässergrund (16) reflektierten Schallwellen Empfangssignale (44) ermittelt werden,
**dadurch gekennzeichnet, dass**
ein oder mehrere anteilig in dem Empfangssignal (44) enthaltene Störsignale (F1, F2, ... , FN) ermittelt werden,
für alle ermittelten Störsignale (F1, F2, ..., FN) der jeweilige Anteil (A_F1, A_F2, ... , A_FN) am Empfangssignal (44) berechnet wird,
ein korrigiertes Empfangssignal (56) ermittelt wird, indem die Störsignale (F1, F2, ... , FN) mit den zugehörigen berechneten Anteilen (A_F1, A_F2, ... , A_FN) zum Korrigieren des Empfangssignals (44) multipliziert von diesem Empfangssignal (44) subtrahiert werden und
anhand des korrigierten Empfangssignals (56) ein Tiefenwert und/oder Ablagewert ermittelt wird.

2. Verfahren nach Anspruch 1,
**gekennzeichnet durch** folgende weitere Schritte:

   a) Ermitteln des jeweiligen Anteils (A_F1, A_F2, ..., A_FN) der Störsignale (F1, F2, ... , FN) am korrigierten Empfangssignal (56),
   b) Erzeugen eines neuen korrigierten Empfangssignals (56) **durch** Subtraktion der Störsignale (F1, F2, ..., FN) mit den jeweiligen berechneten Anteilen (A_F1, A_F2, ..., A_FN) von dem gemessenen Empfangssignal (44) und

c) Durchführen der Schritte a) und b) mit einer vorbestimmten Anzahl.

3. Verfahren nach Anspruch 1 oder 2,
**dadurch gekennzeichnet, dass**
zu jedem ermittelten Störsignal (F1, F2, ..., FN) der jeweilige Anteil (A_F1, A_F2, ... oder A_FN) des am Empfangssignal (44) beteiligten Störsignals (F1, F2, ... oder FN) auf den zuvor ermittelten Anteil (A_F1, A_F2, ... oder A_FN) aufaddiert wird.

4. Verfahren nach einem der vorhergehenden Ansprüche,
**dadurch gekennzeichnet, dass**
die Empfangsvorrichtung einen aus einer Vielzahl von gegeneinander verschwenkten Richtcharakteristiken bestehenden Lotfächer bildet, wobei jeder Richtcharakteristik ein Gruppensignal zugeordnet ist, welches dem Empfangssignal (44) entspricht.

5. Verfahren nach einem der vorhergehenden Ansprüchen,
**dadurch gekennzeichnet, dass**
die Störsignale (F1, F2, ..., FN) anhand gemessener Schiffsbewegungen, insbesondere Rollen (20), Nicken (22) und/oder Gieren (24), ermittelt werden.

6. Verfahren nach einem der vorhergehenden Ansprüchen,
**dadurch gekennzeichnet, dass**
der Anteil (A_F1, A_F2, ... oder A_FN) jedes ermittelten Störsignals (F1, F2, ... oder FN) an dem Empfangssignal (44) mittels eines statistischen Analyseverfahrens, insbesondere mittels linearer Regression, ermittelt wird.

7. Verfahren nach Anspruch 6,
**dadurch gekennzeichnet, dass**
für den Fall, dass mittels des statistischen Analyseverfahrens ein negativer Anteil (A_F1, A_F2, ...oder A_FN) ermittelt wird, dieser Anteil (A_F1, A_F2, ... oder A_FN) des ermittelten Störsignals (F1, F2, ... oder FN) an dem Empfangssignal (44) zu null gesetzt wird.

8. Vorrichtung zur akustischen Vermessung eines Gewässergrundes (16) mittels eines an einem Wasserfahrzeug (10) angebrachten Echolotsystems (40), insbesondere eines Fächerlotes (18), mit einer Sende- und Empfangsvorrichtung, bei dem aufgrund von mittels der Sendevorrichtung ausgesendeten Schallimpulsen reflektierte Schallwellen mittels der Empfangsvorrichtung empfangbar sind, wobei für eine Vielzahl vorgegebener Empfangsrichtungen der vom Gewässergrund (16) reflektierten Schallwellen Empfangssignale (44) ermittelbar sind,
**gekennzeichnet durch**
eine Störsignalerfassungseinheit (46), welche derart ausgebildet ist, um ein oder mehrere anteilig in dem Empfangssignal (44) enthaltene Störsignale (F1, F2, ..., FN) zu ermitteln,
eine Regressionseinheit (50), welche derart ausgebildet ist, um für alle ermittelten Störsignale (F1, F2, ..., FN) den jeweiligen Anteil (A_F1, A_F2, ..., A_FN) am Empfangssignal (44) zu berechnen,
ein Korrekturmodul (52), welches derart ausgebildet ist, um ein korrigiertes Empfangssignal (56) zu erzeugen, indem die ermittelten Störsignale (F1, F2, ..., FN) mit den jeweiligen berechneten Anteilen (A_F1, A_F2, ..., A_FN) zum Korrigieren des Empfangssignals (44) multipliziert von diesem Empfangssignal (44) subtrahierbar sind und anhand des korrigierten Empfangssignals (56) ein Tiefenwert und/oder ein Ablagewert ermittelbar ist.

9. Vorrichtung nach Anspruch 8,
**gekennzeichnet durch**
ein Iterationsmodul (48), welches derart ausgestaltet ist, um das Ermitteln der Anteile (A_F1, A_F2, ..., A_FN) der Störsignale (F1, F2, ..., FN) an dem Empfangssignal (44) und das Subtrahieren der Störsignale (F1, F2, ..., FN) mit den jeweiligen Anteilen (A_F1, A_F2, ..., A_FN) von dem Empfangssignal (44) iterativ durchzuführen, wobei eine Anzahl an Iterationen vorbestimmbar ist,
eine weitere Ausgestaltung der Regressionseinheit (50) derart, dass, falls ein korrigiertes Empfangssignal (56) vorliegt, die jeweiligen Anteile (A_F1, A_F2, ..., A_FN) für alle ermittelten Störsignale (F1, F2, ..., FN) an dem korrigierten Empfangssignal (56) berechenbar sind und
eine weitere Ausgestaltung des Korrekturmoduls (52) derart, dass, falls ein korrigiertes Empfangssignal (56) vorliegt, die Störsignale (F1, F2, ... , FN) mit diesen berechneten Anteilen (A_F1, A_F2, ..., A_FN) zur weiteren Korrektur des korrigierten Empfangssignals (56) von dem gemessenen Empfangssignal (44) subtrahierbar sind.

**10.** Vorrichtung nach Anspruch 8 oder 9,
**gekennzeichnet durch**
eine Ausgestaltung der Regressionseinheit (50) derart, um zu jedem ermittelten Störsignal (F1, F2, ... oder FN) den jeweiligen Anteil (A_F1, A_F2, ... oder A_FN) des am Empfangssignal (44) beteiligten Störsignals (F1, F2, ... oder FN) auf den zuvor ermittelten Anteil (A_F1, A_F2, ... oder A_FN) aufzuaddieren.

**11.** Vorrichtung nach einem der Ansprüche 8 bis 10,
**gekennzeichnet durch**
eine Empfangsvorrichtung, welche derart ausgebildet ist, um einen aus einer Vielzahl von gegeneinander verschwenkten Richtcharakteristiken bestehenden Lotfächer zu bilden, wobei jeder Richtcharakteristik ein Gruppensignal gleichsetzbar ist, welches dem Empfangssignal (44) entspricht.

**12.** Vorrichtung nach einem der Ansprüche 8 bis 11,
**gekennzeichnet durch**
eine Ausgestaltung der Störsignalerfassungseinheit (46) derart, um die Störsignale (F1, F2, ..., FN) anhand gemessener Schiffsbewegungen, insbesondere Rollen (20), Nicken (22) und/oder Gieren (24), zu ermitteln.

**13.** Vorrichtung nach einem der Ansprüche 8 bis 12,
**gekennzeichnet durch**
eine weitere Ausgestaltung der Regressionseinheit (50) derart, um den Anteil (A_F1, A_F2, ... oder A_FN) jedes ermittelten Störsignals (F1, F2, ... oder FN) an dem Empfangssignal (44) mittels eines statistischen Analyseverfahrens, insbesondere mittels linearer Regression, zu ermitteln.

**14.** Vorrichtung nach Anspruch 13,
**gekennzeichnet durch**
eine weitere Ausgestaltung der Regressionseinheit (50) derart, um für den Fall, dass mittels des statistischen Analyseverfahrens ein negativer Anteil (A_F1, A_F2, ... oder A_FN) ermittelt wird, dieser Anteil (A_F1, A_F2, ... oder A_FN) des ermittelten Störsignals (F1, F2, ... oder FN) an dem Empfangssignal (44) zu null zu setzen.

## Claims

**1.** Method for the acoustic measurement of a bed of a body of water (16) by an echo sounder system (40) attached to a watercraft (10), in particular a fan echo sounder (18), with a transmitting and receiving device in which sound waves reflected due to sound impulses transmitted by the transmitting device are received by the receiving device, wherein received signals (44) are determined for a plurality of given receiving directions of the sound waves reflected by the bed of a body of water (16),
**characterized by that**
one or more disturbance signals (F1, F2, ... , FN) contained as component(s) in the received signal (44) are determined,
the particular component (A_F1, A_F2, ... , A_FN) is calculated for all determined disturbance signals (F1, F2, ... , FN) from the received signal (44),
a corrected received signal (56) is determined in that the disturbance signals (F1, F2, ... , FN) with the associated, calculated components (A_F1, A_F2, ... , A_FN) for correcting the received signal (44) multiplied by this received signal (44) are subtracted, and
a depth value and/or depositing value is determined using the corrected received signal (56).

**2.** The method according to claim 1,
**characterized by** the following further steps:

a) Determination of the particular component (A_F1, A_F2, ... , A_FN) of the disturbance signals (F1, F2, ... , FN) from the corrected received signal (56),
b) Generation of a new corrected received signal (56) by subtracting the disturbance signals (F1, F2, ... , FN) with the particular calculated components (A_F1, A_F2, ... , A_FN) from the measured received signal (44), and
c) Carrying out the steps a) and b) with a predetermined number.

**3.** The method according to claim 1 or 2,
**characterized by that**

for each determined disturbance signal (F1, F2, ... or FN) the particular component (A_F1, A_F2, ... or A_FN) of the disturbance signal (F1, F2, ... , FN) participating in the received signal (44) is loaded on to the previously determined component (A_F1,A_F2,... or A_FN).

4. The method according to one of the previous claims,
   **characterized by that**
   the receiving device forms an echo sounder fan consisting of a plurality of direction characteristics pivoted against each other, whereby a group signal is associated with each direction characteristic and corresponds to the received signal (44).

5. The method according to one of the previous claims,
   **characterized by that**
   the disturbance signals (F1, F2, ... , FN) are determined using measured ship movements, in particular rolling (20), pitching (22) and/or yawing (24).

6. The method according to one of the previous claims,
   **characterized by that**
   the component (A_F1, A_F2, ... or A_FN) of each determined disturbance signal (F1, F2, ... or FN) is determined from the received signal (44) by a statistical analysis method, in particular by linear regression.

7. The method according to claim 6,
   **characterized by that**
   for the case that a negative component (A_F1, A_F2, ... or A_FN) is determined by the statistical analysis method, this component (A_F1, A_F2, ... or A_FN) of the determined disturbance signal (F1, F2, ... or FN) is set to null on the received signal (44).

8. Device for the acoustic measurement of a bed of a body of water (16) by an echo sounder system (40) attached to a watercraft (10), in particular a fan echo sounder (18), with a transmitting and receiving device in which sound waves reflected due to sound impulses transmitted by the transmitting device can be received by the receiving device, wherein received signals (44) can be determined for a plurality of given receiving directions of the sound waves reflected by the bed of a body of water (16),
   **characterized by**
   a disturbance signal detection unit (46) that is constructed in such a manner as to determine one or more disturbance signals (F1, F2, ... , FN) contained as a component in the received signal (44),
   a regression unit (50) that is constructed in such a manner as to calculate for all determined disturbance signals (F1, F2, ... , FN) the particular component (A_F1, A_F2, ..., A_FN) on the received signal (44),
   a correction module (52) that is constructed in such a manner as to generate a corrected received signal (56) in that the determined disturbance signals (F1, F2, ... , FN) with the particular calculated components (A_F1, A_F2, ..., A_FN) for correcting the received signal (44) multiplied by this received signal (44) can be subtracted and a depth value and/or a depositing value can be determined using the corrected received signal (56).

9. The device according to claim 8,
   **characterized by**
   an iteration module (48) that is constructed in such a manner as to iteratively carry out the determination of the components (A_F1, A_F2, ..., A_FN) of the disturbance signals (F1, F2, ... , FN) on the received signal (44) and the subtracting of the disturbance signals (F1, F2, ... , FN) with the particular components (A_F1, A_F2, ... , A_FN) from the received signal (44), wherein a number of iterations can be predetermined,
   another embodiment of the regression unit (50) such that if a corrected received signal (56) is present, the particular components (A_F1, A_F2, ..., A_FN) for all determined disturbance signals (F1, F2, ... , FN) can be calculated on the corrected received signal (56), and
   another embodiment of the correction module (52) such that if a corrected received signal (56) is present, the disturbance signals (F1, F2, ... , FN) can be subtracted with these calculated components (A_F1, A_F2, ..., A_FN) from the measured received signal (44) for the further correction of the corrected received signal (56).

10. The device according to claim 8 or 9,
    **characterized by**
    an embodiment of the regression unit (50) for adding to each determined disturbance signal (F1, F2, ... , FN) the particular component (A_F1, AF2, ... or A_FN) of the disturbance signal (F1, F2, ... or FN) participating in the received signal (44) onto the previously determined component (A_F1, A_F2, ... or A_FN).

11. The device according to one of claims 8 to 10,
    **characterized by**
    a receiving device constructed in such a manner as to form a fan echo sounder consisting of a plurality of direction characteristics pivoted against one another, wherein each direction characteristic can be equated with a group signal that corresponds to the received signal (44).

12. The device according to one of claims 8 to 11,
    **characterized by**
    an embodiment of the disturbance signal detection unit (46) for determining the disturbance signals (F1, F2, ... , FN) using measured ship movements, in particular rolling (20), pitching (22), and/or yawing (24).

13. The device according to one of claims 8 to 12,
    **characterized by**
    another embodiment of the regression unit (50) for determining the component (A_F1, A_F2, ... or A_FN) of each determined disturbance signal (F1, F2, ... , FN) on the received signal (44) by a statistical analysis method, in particular by linear regression.

14. The device according to claim 13,
    **characterized by**
    another embodiment of the regression unit (50) for the case that a negative component (A_F1, A_F2, ... or A_FN) is determined by the statistical analysis method, for setting this component (A_F1, A_F2, ... or A_FN) of the determined disturbance signal (F1, F2, ... , FN) on the received signal (44) to null.

**Revendications**

1. Procédé destiné à la mesure acoustique d'un sol sous-marin (16) au moyen d'un système échosondeur (40) monté sur un véhicule marin (10), en particulier d'un sondeur multifaisceaux (18), comprenant un dispositif d'émission et de réception, selon lequel, suite à l'émission d'impulsions acoustiques au moyen du dispositif d'émission, des ondes acoustiques réfléchies sont reçues au moyen du dispositif de réception, des signaux de réception (44) étant déterminés pour une pluralité de directions de réception prédéfinies des ondes acoustiques réfléchies par le sol sous-marin (16),
   **caractérisé en ce que**
   un ou plusieurs signaux parasites (F1, F2, ..., FN) contenus proportionnellement dans le signal de réception (44) sont déterminés,
   pour tous les signaux parasites (F1, F2, ..., FN) déterminés, la part (A_F1, A_F2, ..., A_FN) respective dans le signal de réception (44) est calculée,
   un signal de réception corrigé (56) est déterminé en soustrayant de ce signal de réception (44) les signaux parasites (F1, F2, ..., FN) avec les parts (A_F1, A_F2, ..., A_FN) calculées associées pour corriger le signal de réception (44) et une valeur de profondeur et/ou une valeur de distance latérale est déterminée à l'aide du signal de réception corrigé (56).

2. Procédé selon la revendication 1,
   **caractérisé par** les autres étapes suivantes :

   a) déterminer la part (A_F1, A_F2, ..., A_FN) respective des signaux parasites (F1, F2, ..., FN) dans le signal de réception corrigé (56),
   b) générer un nouveau signal de réception corrigé (56) en soustrayant du signal de réception (44) mesuré les signaux parasites (F1, F2, ..., FN) avec les parts (A_F1, A_F2, ..., A_FN) calculées respectives et
   c) exécuter les étapes a) et b) un nombre prédéterminé de fois.

3. Procédé selon la revendication 1 ou 2,
   **caractérisé en ce que**
   pour chaque signal parasite (F1, F2, ... , FN) déterminé, la part (A_F1, A_F2, ... ou A_FN) respective du signal parasite (F1, F2, ... ou FN) faisant partie du signal de réception (44) est ajoutée à la part (A_F1, A_F2, ... ou A_FN) déterminée précédemment.

**4.** Procédé selon l'une des revendications précédentes,
**caractérisé en ce que**
le dispositif de réception forme un éventail de sondage composé d'une pluralité de directivités pivotées les unes par rapport aux autres, un signal de groupe qui correspond au signal de réception (44) étant associé à chaque directivité.

**5.** Procédé selon l'une des revendications précédentes,
**caractérisé en ce que**
les signaux parasites (F1, F2, ..., FN) sont déterminés à l'aide de mouvements mesurés du navire, en particulier le roulis (20), le tangage (22) et/ou l'embardée (24).

**6.** Procédé selon l'une des revendications précédentes,
**caractérisé en ce que**
la part (A_F1, A_F2, ... ou A_FN) de chaque signal parasite (F1, F2, ... ou FN) déterminé dans le signal de réception (44) est déterminée au moyen d'un procédé d'analyse statistique, en particulier au moyen d'une régression linéaire.

**7.** Procédé selon la revendication 6,
**caractérisé en ce que**
dans le cas où une part (A_F1, A_F2, ... ou A_FN) négative est déterminée au moyen du procédé d'analyse statistique, cette part (A_F1, A_F2, ... ou A_FN) du signal parasite (F1, F2, ... ou FN) déterminé dans le signal de réception (44) est mise à zéro.

**8.** Dispositif destiné à la mesure acoustique d'un sol sous-marin (16) au moyen d'un système échosondeur (40) monté sur un véhicule marin (10), en particulier d'un sondeur multifaisceaux (18), comprenant un dispositif d'émission et de réception, avec lequel, suite à l'émission d'impulsions acoustiques au moyen du dispositif d'émission, des ondes acoustiques réfléchies peuvent être reçues au moyen du dispositif de réception, des signaux de réception (44) pouvant être déterminés pour une pluralité de directions de réception prédéfinies des ondes acoustiques réfléchies par le sol sous-marin (16),
**caractérisé par**
une unité de détection de signaux parasites (46), qui est réalisée de manière à déterminer un ou plusieurs signaux parasites (F1, F2, ..., FN) contenus proportionnellement dans le signal de réception (44),
une unité de régression (50), qui est réalisée de manière à calculer pour tous les signaux parasites (F1, F2, ..., FN) déterminés la part (A_F1, A_F2, ..., A_FN) respective dans le signal de réception (44),
un module de correction (52), qui est réalisé de manière à générer un signal de réception corrigé (56), par le fait que les signaux parasites (F1, F2, ..., FN) déterminés avec les parts (A_F1, A_F2, ..., A_FN) calculées respectives peuvent être soustraits de ce signal de réception (44) pour corriger le signal de réception (44) et une valeur de profondeur et/ou une valeur de distance latérale peut être déterminée à l'aide du signal de réception corrigé (56).

**9.** Dispositif selon la revendication 8,
**caractérisé par**
un module d'itération (48) qui est configuré de manière à exécuter la détermination des parts (A_F1, A_F2, ..., A_FN) des signaux parasites (F1, F2, ..., FN) dans le signal de réception (44) et la soustraction des signaux parasites (F1, F2, ..., FN) avec les parts (A_F1, A_F2, ..., A_FN) respectives du signal de réception (44) de manière itérative, un nombre d'itérations pouvant être prédéterminé,
une autre configuration de l'unité de régression (50) de telle manière que, en présence d'un signal de réception corrigé (56), les parts (A_F1, A_F2, ..., A_FN) respectives dans le signal de réception corrigé (56) peuvent être calculées pour tous les signaux parasites (F1, F2, ..., FN) déterminés et
une autre configuration du module de correction (52) de telle manière que, en présence d'un signal de réception corrigé (56), les signaux parasites (F1, F2, ... , FN) avec ces parts (A_F1, A_F2, ..., A_FN) calculées peuvent être soustraits du signal de réception (44) mesuré pour une autre correction du signal de réception corrigé (56).

**10.** Dispositif selon la revendication 8 ou 9,
**caractérisé par**
une configuration de l'unité de régression (50) de manière à ajouter, pour chaque signal parasite (F1, F2, ... ou FN) déterminé, la part (A_F1, A_F2, ... ou A_FN) respective du signal parasite (F1, F2, ... ou FN) faisant partie du signal de réception (44) à la part (A_F1, A_F2, ... ou A_FN) déterminée précédemment.

**11.** Dispositif selon l'une des revendications 8 à 10,

**caractérisé par**

un dispositif de réception, qui est réalisé de manière à former un éventail de sondage composé d'une pluralité de directivités pivotées les unes par rapport aux autres, un signal de groupe qui correspond au signal de réception (44) pouvant être assimilé à chaque directivité.

**12.** Dispositif selon l'une des revendications 8 à 11,
**caractérisé par**
une configuration de l'unité de détection de signaux parasites (46) de manière à déterminer les signaux parasites (F1, F2, ..., FN) à l'aide de mouvements mesurés du navire, en particulier le roulis (20), le tangage (22) et/ou l'embardée (24).

**13.** Dispositif selon l'une des revendications 8 à 12,
**caractérisé par**
une autre configuration de l'unité de régression (50) de manière à déterminer la part (A_F1, A_F2, ... ou A_FN) de chaque signal parasite (F1, F2, ... ou FN) déterminé dans le signal de réception (44) au moyen d'un procédé d'analyse statistique, en particulier au moyen d'une régression linéaire.

**14.** Dispositif selon la revendication 13,
**caractérisé par**
une autre configuration de l'unité de régression (50) de manière à, dans le cas où une part (A_F1, A_F2, ... ou A_FN) négative est déterminée au moyen du procédé d'analyse statistique, mettre à zéro cette part (A_F1, A_F2, ... ou A_FN) du signal parasite (F1, F2, ... ou FN) déterminé dans le signal de réception (44).

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- EP 0140258 A1
- EP 0512276 A2
- DE 3520398 A1
- DE 4319607 A1
- DE 3516698 A1